# EUROPEAN PATENT APPLICATION

(11) **EP 2 492 849 A2**
(43) Date of publication of application: **29.08.2012**
(21) Application number: 12152729.5
(22) Date of filing: 26.01.2012
(51) Int. Cl.: G06K 19/077, G07C 5/08

(54) **Wireless aircraft maintenance log**

(30) Priority: 22.02.2011 US 201113032235
(71) Applicant: United Technologies Corporation, Hartford, CT 06101 (US)
(72) Inventor: Scheid, Paul Raymond, West Hartford, CT Connecticut 06107 (US); Beacham, William H. Jr., Enfield, CT Connecticut 06082 (US); Ouzounov, Alexey Sergeev, Bolton, CT Connecticut 06043 (US); Geib, Andrew F., Glastonbury, CT Connecticut 06033 (US); Donahue, Kevin, Cherry Hill, NJ New Jersey 08003 (US); Weakley, Thomas Craig, Simpsonville, SC South Carolina 29681 (US); Masslon, Dale R., Tolland, CT Connecticut 06084 (US)
(74) Representative: Stevens, Jason Paul

(57) **Abstract**

A method of aircraft maintenance involves storing part information relating to an aircraft part (14) on the aircraft part (14). The part information is wirelessly transmitted from the aircraft part (14) to a receiver (62). A note of a change relating to the aircraft part (62) is made. The part information with the note of the change relating to the aircraft part (14, 46) is electronically stored at a location remote from the aircraft part.

The information can be stored on an aircraft part assembly comprising an aircraft part (14), a metal data plate (20) mounted on the aircraft part, and a radio frequency identification tag (RFID tag) (18) coupled to the metal data plate (20) such that said metal data plate (20) is an RFID tag resonator. The RFID tag can be mounted between the data plate and the aircraft part.

## Description

### BACKGROUND OF THE INVENTION

This disclosure relates to a method and assembly for aircraft maintenance.

An aircraft generally has a life cycle that can extend over decades. As the aircraft ages, parts on the aircraft are repaired or replaced. Through this life cycle, the parts may become subject to design modification and revision. Because these changes in the parts of the aircraft may affect its operation, the Federal Aviation Administration and other national aviation authorities require airlines and maintenance organizations to keep a maintenance log of the parts, which are repaired or replaced on the aircraft.

In the field, a maintenance technician typically enters changes to the parts of the aircraft into the log by hand. This process is both time consuming and subject to error. A technician can forget to record changes in the first place, especially if the repairs are conducted in the evening and the technician leaves record keeping for the next morning.

A need therefore exists for a method of aircraft maintenance that records changes about an aircraft conveniently and easily.

### SUMMARY OF THE INVENTION

Disclosed is an aircraft part assembly having an aircraft part for use in an aircraft, a metal data plate mounted on the aircraft part, and a radio frequency identification tag (RFID tag) configured such that the metal data plate is an RFID tag resonator.

Also disclosed is an aircraft part assembly having an aircraft part for use in an aircraft, a metal data plate mounted on the aircraft part, and an RFID tag mounted between the aircraft part and the metal data plate.

Also disclosed is a method of conducting aircraft maintenance, having the steps of receiving stored part information relating to an aircraft part from an RFID tag coupled to a part data plate on the part using a portable device, receiving stored replacement part information relating to a replacement part from an RFID tag coupled to a replacement part data plate on the replacement part using the portable device, formatting the part information and the replacement part information into an electronic document, and wirelessly transmitting the electronic document to a server.

The various features and advantages of this invention will become apparent to those skilled in the art from the following detailed description. The drawings that accompany the detailed description can be briefly described as follows.

### BRIEF DESCRIPTION OF THE DRAWINGS

Figure 1 illustrates a schematic view of an aircraft part with an RFID tag.
Figure 2 illustrates a schematic side view of an aircraft part with an RFID tag.
Figure 3 illustrates a schematic view of a system for aircraft maintenance employing parts with RFID tags.
Figure 4 illustrates a method of aircraft maintenance.

### DETAILED DESCRIPTION OF THE PREFERRED EMBODIMENT

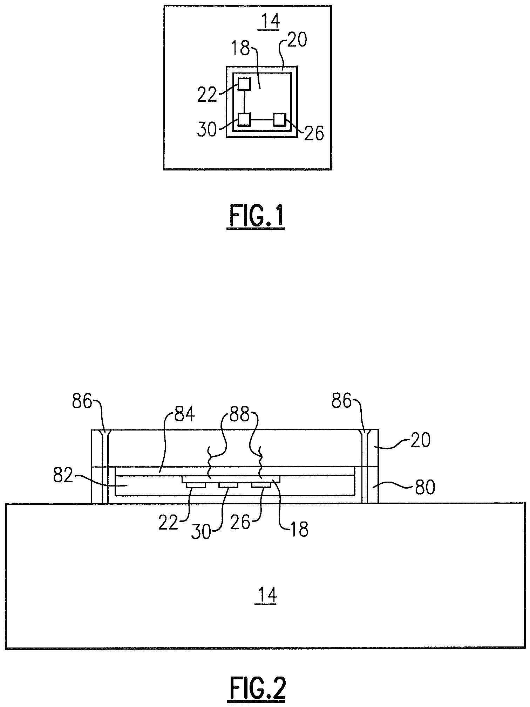

Figure 1 shows a schematic illustration of aircraft part 14 with a radio frequency identification tag (RFID tag 18). RFID tag 18 has a receiver/transmitter 22, memory unit 26, and processor 30. RFID tag 18 may be powered by battery or by radio frequency waves transmitted by another device, such as a remote transmitter. The RFID tag 18 is incorporated into a metal data plate 20, which textually displays data about the aircraft part 14. The textual data can either be engraved in the data plate 20, or printed on the data plate 20. The RFID tag 18 is between the data plate 20 and an exterior surface of the aircraft part 14.

In the past, information relating to an aircraft part, such as its part number or serial number, was only included on the data plate 20 by the manufacturer. If this part were repaired or replaced, a maintenance technician would record the number by hand at the aircraft and then subsequently enter this information into a log book or computer maintained away from the aircraft. Such a process relies on the maintenance technician to record the part information accurately.

Using the RFID tag 18, information relating to the aircraft part 14 can be communicated and recorded to another location with ease and accuracy, as will be explained. The RFID tag 18 has a memory unit 26, which is both electronically readable and writable. The memory unit 26 can store part information relating to the aircraft part 14, such as part number, serial number, and part configuration (the specific design of the part). In addition, the memory unit 26 is writable and can store transmitted part information, such as the service and revision history of the aircraft part 14 or any changes or revisions to the aircraft part 14 made by a maintenance technician. The type of information stored on the memory unit 26 is not limited to the foregoing information but includes other types of information useful in the repair, maintenance and tracking of the aircraft part 14.

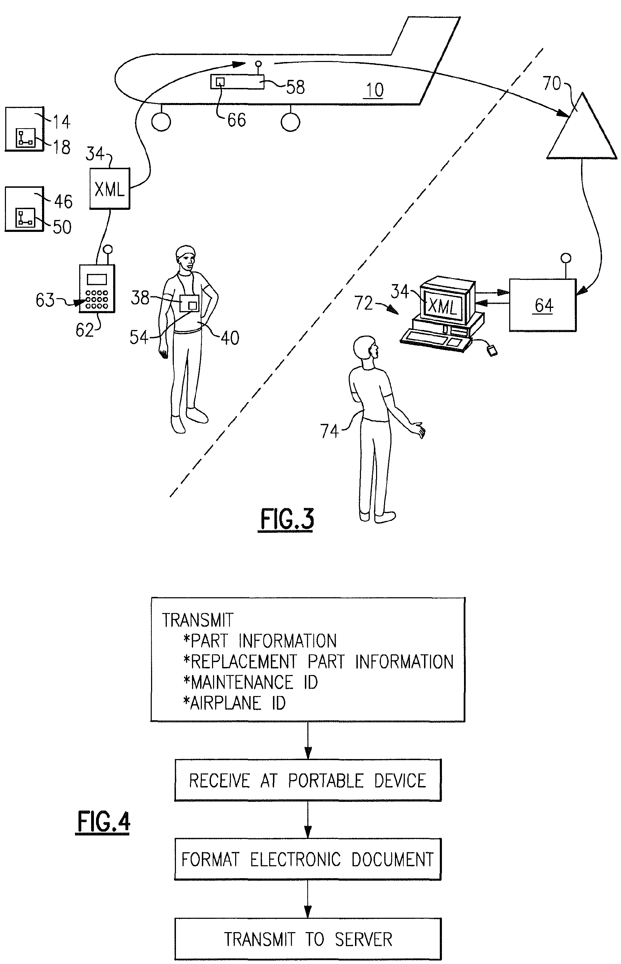

A processor 30 controls both the memory unit 26 and the receiver/transmitter 22 so as to permit the accessing of information stored in the memory unit 26, such as part information, as well as its revision by a remote device, such as a portable device 62 (shown in Figure 3). The receiver/transmitter 22 broadcasts and receives information using radio frequency signals. A signal to the receiver/transmitter 22 from a portable device 62 prompts the processor 30 to release and transmit part information from the memory unit 26 as well as receive and store information from the portable device 62.

Figure 2 shows a schematic illustration of a side view of the aircraft part 14 of Figure 1 with the mounted data plate 20 and the RFID tag 18. The data plate 20 is mounted to the aircraft part 14 using a U-shaped data plate mount 80. The RFID tag 18 is mounted to the data plate 20 via a dielectric mounting substrate 84 in a gap 82 between the aircraft part 14 and the data plate 20. The gap 82 is formed by the data plate mount 80 and is enlarged in Figure 2 for illustrative purposes. Obscuring the RFID tag 18 between the data plate 20 and the aircraft part 14 would normally cause interference with wireless transmissions to and from the RFID tag 18. However, the RFID tag 18 and the data plate 20 are coupled such that the data plate 20 serves as a resonator for the RFID tag 18 to amplify incoming and outgoing radio frequency transmissions. By way of example, the coupling could be a capacitive coupling or an inductive coupling. The coupling is illustrated in Figure 2 via lines 88 and is not a physical connection. The amplification effect of the resonator allows the RFID tag 18 to receive wirelessly transmitted signals that would otherwise be too weak to penetrate the interference of the data plate 20. The data plate 20 is fixed to the aircraft part 14 either via mechanical fasteners placed through a set of fastener holes 86, or via an adhesive.

With reference to Figure 3, the RFID tag 18 is illustrated with other elements of the system. A maintenance technician 40 is shown carrying the portable device 62, such as a personal digital assistant, having both electronically readable and writable memory, processor, display and keyboard as well as a radio frequency receiver and transmitter. The portable device 62 is used by maintenance technician 40 to access and write part information on the RFID tag 18 by communicating with the RFID tag 18 through a radio frequency signal. In addition, the portable device 62 has programming that permits the formatting of information, such as part information, into an electronic document 34. The electronic document 34 may be an XML format that permits posting of information on the internet.

In addition, the maintenance technician 40 is shown wearing an identification badge 38 with an RFID tag 54, which is constructed in the same manner as the RFID tag 18. The RFID tag 54 stores information relating to the identification of the maintenance technician 40 as well as security verification information that permits the maintenance technician 40 access to portable device 62 as well as RFID tag 18.

An aircraft 10 also includes an aircraft computer 58, which acts as a server for the portable device 62. The portable device 62 communicates wirelessly with the aircraft computer 58 using radio frequency waves. Accordingly, the aircraft computer 58 is linked with a receiver and transmitter for communication with the portable device 62 as well as a cell tower 70 or other relay device, such as a satellite. The cell tower 70 is in communication with a second server 64, which is a computer located at a remote location such as a maintenance organization or airline facility. The second server 64 is linked with a computer 72 having a display and keyboard. With proper authorization, a worker 74 has access to the computer 72.

With reference to Figure 3 and 4, the method for aircraft maintenance will now be explained. A maintenance technician 40 removes or otherwise services the aircraft part 14. Using the portable device 62, the maintenance technician 40 prompts the RFID tag 18 to transmit part information to the portable device 62, which stores information in its memory. This part information is stored on the portable device 62 when the aircraft part 14 is either repaired or replaced. The maintenance technician 40 inputs a notation of any change made to the aircraft part 14 into the portable device 62 by a keyboard 63. For example, if the aircraft part 14 is repaired, the maintenance technician 40 can input the type and nature of repair as well as the date of repair into memory of the portable device 62. This information can later be transmitted to a remote location. The portable device 62 may have programming that walks the maintenance technician 40 through the repair of the aircraft part 14 step by step.

Alternatively, the change may be a replacement of the aircraft part 14 by another aircraft part, such as a replacement part 46. Like the aircraft part 14, the replacement part 46 has an RFID tag 50. The RFID tag 50 stores the replacement part 46 information, which is the same type of information as found on the RFID tag 18, such as revision history of the part, part configuration, service history, part number, serial number or other related information. Through the portable device 62, the maintenance technician 40 prompts the RFID tag 50 of the replacement part 46 to wirelessly transmit replacement part information to the portable device 62. The portable device 62 then stores replacement part information in memory along with the previously stored part information relating to the aircraft part 14. The maintenance technician 40 then uses the keyboard 63 on the portable device 62 to record that a replacement part 46 has replaced the previous aircraft part 14.

The maintenance technician 40 then prompts the portable device 62 to obtain information relating to the identity of the maintenance technician 40 from the RFID tag 54 and information relating to the identification of the aircraft 10. To facilitate obtaining information about the aircraft 10, the aircraft 10 may have an RFID tag 66, which records its identification number, such as its manufacturer's identification number or the identity of the aircraft in the fleet. Once this information is obtained, then the portable device 62 formats part information, replacement part information (if part is replaced), aircraft identification, maintenance technician identification and notes concerning the nature of service, such as a note that the part has been changed, into an electronic document 34, which is formatted in XML.

The portable device 62 transmits electronic document 34 to a remote location, such as an aircraft computer 58, which then relays the electronic document 34 to a cell tower 70, which passes the electronic document 34 to a second server 64 through the internet. The computer 72 then displays the electronic document 34 to permit viewing by a worker 74, who is located at the remote facility. The electronic document 34 may be stored by a second server 64 as well as the aircraft computer 58 and the portable device 62.

In addition, the portable device 62 can further write information wirelessly onto the RFID tag 18 as well as the RFID tag 50. A maintenance technician 40 can accordingly input into both or either RFID tags 18 and 50 information relating to the maintenance of these parts as well as other notes. In this way, a service history of the part can be maintained to facilitate the future use and/or repair of the aircraft 10.

The foregoing description shall be interpreted as illustrative and not in any limiting sense. A worker of ordinary skill in the art would recognize that certain modifications would come within the scope of this invention. For that reason, the follow claims should be studied to determine the true scope and content of this invention.

## Claims

1. An aircraft part assembly comprising:
an aircraft part (14);
a metal data plate (20) mounted on said aircraft part (14); and
a radio frequency identification tag (RFID tag) (18) coupled to said metal data plate (20) such that said metal data plate (20) is an RFID tag resonator.

2. The aircraft part assembly of claim 1, wherein said RFID tag (18) is between said metal data plate (20) and said aircraft part (14).

3. The aircraft part assembly of claim 1 or claim 2, wherein said RFID tag (18) comprises:
a writeable memory unit (26) for storing part information;
a processor (30) for processing part information;
a wireless transmitter (22) in communication with the writeable memory unit (26); and
a wireless receiver (22) in communication with the writable memory unit (26).

4. The aircraft part assembly of claim 3, wherein said part information comprises at least one of a revision history, a service history, a part configuration, a part number, and a serial number.

5. The aircraft part assembly of any preceding claim, wherein said RFID tag (18) is capacitively coupled to said metal data plate (20).

6. The aircraft part assembly of any of claims 1 to 4, wherein said RFID tag (18) is inductively coupled to said metal data plate (20).

7. The aircraft part assembly of any preceding claim, wherein said metal data plate (20) is mounted to said aircraft part (14) via a U-shaped bracket (80).

8. The aircraft part assembly of claim 7, wherein said RFID tag (18) is mounted to a dielectric substrate (84) within a gap (82) defined by said U-shaped bracket (80).

9. The aircraft part assembly of any preceding claim, wherein said RFID tag (18) is mounted to said metal data plate (20) via a dielectric layer (84).

10. A method of conducting aircraft maintenance, comprising the steps of:
receiving stored part information relating to an aircraft part (14) from a radio frequency identification (RFID) tag (18) coupled to a part data plate (20), such that said part data plate (20) is an RFID tag resonator, on said part using a portable device (62);
receiving stored replacement part information relating to a replacement part (46) from an RFID tag (50) coupled to a replacement part data plate, such that said replacement part data plate is an RFID tag resonator, on said replacement part (46) using said portable device (62);
formatting said part information and said replacement part information into an electronic document (34); and
wirelessly transmitting the electronic document (34) to a server (58).

11. The method of claim 10, wherein each of said part information and said replacement part information comprises at least one of a revision history, a service history, a part configuration, a part number, and a serial number.

12. The method of claim 10 or claim 11, further comprising the step of transmitting new replacement part information from said portable device (62) to said replacement part RFID tag (50), thereby causing said replacement part information to be overwritten with said new replacement part information.

13. The method of any of claims 10 to 12, wherein said server (58) is on an aircraft (10) containing said aircraft part.

14. The method of claim 13, further comprising the step of relaying the electronic document (34) from said server (58) to a remote server (64), wherein said remote server (64) is away from said aircraft (10).
